# EUROPÄISCHE PATENTSCHRIFT

(11) **EP 2 331 835 B1**
(45) Veröffentlichungstag und Bekanntmachung des Hinweises auf die Patenterteilung: **26.06.2013**
(21) Anmeldenummer: 09781693.8
(22) Anmeldetag: 11.08.2009
(51) Int. Cl.: F16C 33/02, F16C 33/04, F16C 33/10, F16C 33/12, F16H 7/12

(54) **TRIBOSYSTEM FÜR EIN MECHANISCHES SPANNSYSTEM IN ÖLIGER UMGEBUNG**
TRIBOSYSTEM FOR A MECHANICAL TENSIONING SYSTEM IN AN OILY ENVIRONMENT
SYSTÈME TRIBOLOGIQUE POUR UN SYSTÈME DE SERRAGE MÉCANIQUE DANS UN ENVIRONNEMENT HUILEUX

(30) Priorität: 18.09.2008 DE 102008047726
(43) Veröffentlichungstag der Anmeldung: 15.06.2011
(73) Patentinhaber: Schaeffler Technologies AG & Co. KG, 91074 Herzogenaurach (DE)
(72) Erfinder: GRAF, Herbert, 96120 Bischberg (DE); PFLUG, Rainer, 91560 Heilsbronn (DE)
(86) Internationale Anmeldenummer: PCT/EP2009/060369
(87) Internationale Veröffentlichungsnummer: WO 2010/031641

(56) Entgegenhaltungen:
- EP-A- 0 337 215
- EP-A1- 1 772 532
- WO-A-2005/080810
- DE-A1- 10 225 783
- DE-A1- 10 235 540
- DE-A1-102005 026 153
- DE-A1-102007 026 832
- US-A- 5 560 716
- US-A- 5 919 107

## Beschreibung

### Gebiet der Erfindung

Die vorliegende Erfindung betrifft ein mechanisches Spannsystem nach einem Exzenter-Prinzip für ein Zugmittel eines Zugmitteltriebs einer Brennkraftmaschine. Das Spannsystem umfasst ein zylindrisches Trägerelement mit integrierter Längsbohrung für eine Schraube zur lösbaren Befestigung an einem ortsfesten Maschinenteil, wobei das Trägerelement eine verschleißfeste Oberfläche aufweist und von einer Exzenterbuchse umgeben ist, welche über ein mit dem Trägerelement zusammenwirkendes Gleitlager drehbar gelagert ist und ein Wälzlager mit zugehöriger Laufscheibe trägt, wobei zur Aufbringung einer Spreizkraft eine zwischen dem Trägerelement und der Exzenterbuchse wirkende Torsionsfeder vorgesehen ist und wobei zwischen dem Gleitlager und dem Trägerelement ein Lagerspiel von s 150 µm vorgesehen ist.

### Hintergrund der Erfindung

Die vorliegende Erfindung erstreckt sich vornehmlich auf das Einsatzgebiet von Zugmitteltrieben an Brennkraftmaschinen. Dabei wird zwischen einem Aggregatetrieb, zum Antrieb eines der Aggregate wie, beispielsweise Klimakompressor, Wasserpumpe oder Generator und einem auch als Synchrontrieb zu bezeichnenden Steuertrieb zum Antrieb von Nockenwellen der Brennkraftmaschine unterschieden. Als Zugmittel wird dazu bevorzugt ein Zahnriemen eingesetzt. Im Betriebszustand ist eine stets ausreichende Vorspannung des Zugmittels zu gewährleisten, um einen Schlupf im Aggregatbetrieb oder einen Zahnsprung im Steuertrieb zu vermeiden. Zur Erzielung einer ausreichenden Vorspannung wird bevorzugt ein nach dem Einfachexzenter-Prinzip oder dem Doppelexzenter-Prinzip funktionierendes Spannsystem eingesetzt.

Ein Doppelexzenter-Spannsystem ist beispielsweise aus der DE 40 33 777 A1 bekannt. Dieses Spannsystem umfasst einen auch als Trägerelement zu bezeichnenden Einstellexzenter mit außermittig integrierter Längsbohrung, die zur Aufnahme einer Befestigungsschraube bestimmt ist. Der Einstellexzenter im Einbauzustand über eine Grundplatte an einem Maschinenteil, insbesondere einem Kurbelgehäuse der Brennkraftmaschine abgestützt und mittels der Befestigungsschraube lösbar befestigt. Außenseitig wird der Einstellexzenter von einem auch als Betriebsexzenter zu bezeichnenden Arbeitsexzenter umschlossen, wobei in einem Ringspalt zwischen einer Mantelfläche des Einstellexzenters und einer Innenwandung des Arbeitsexzenters als Gleitlager eine Gleitlagerbuchse eingesetzt ist. Auf dem Arbeitsexzenter ist ein beidseitig der Wälzkörper abgedichtetes Wälzlager positioniert, dessen Außenring mit zugehöriger Laufscheibe im Betriebszustand mittelbar oder unmittelbar mit einem Zugmittel des Zugmitteltriebs zusammenwirkt. Zur Erzielung einer kraftschlüssigen Anlage der Laufscheibe an dem Zugmittel ist zwischen der Grundplatte und dem Betriebsexzenter eine Torsionsfeder eingesetzt, die den Betriebsexzenter und die damit in Verbindung stehende Laufscheibe permanent in eine das Zugmittel spannende Position verlagert. Zur axialen Abstützung einer Federkraft der Torsionsfeder ist der Arbeitsexzenter an einem rechtwinkligen Bord der Gleitlagerbuchse des Arbeitsexzenters abgestützt. Das als Trockenreibbelag ausgebildete Gleitlager mit einer axialen und radialen Gleitlagerstelle bewirkt gleichzeitig eine Schwingungsdämpfung des Spannsystems.

Ein Spannsystem der eingangs genannten Art ist aus der DE 102 35 540 A1 bekannt.

### Zusammenfassung der Erfindung

Der Erfindung liegt die Aufgabe zu Grunde, eine Lösung zu schaffen, durch welche bei einem Einsatz des Spannsystems in einer öligen Umgebung eine ausreichende Dämpfung realisiert werden kann.

Diese Aufgabe wird erfindungsgemäß durch die Merkmale des unabhängigen Anspruchs 1 gelöst, wonach das Spannsystem in einer ölhaltigen Umgebung eingesetzt ist und die aus dem Gleitlager und dem Trägerelement gebildete Gleitlagerung unter Ölbeaufschlagung einen Reibwert von 0,05 bis 0,15 aufweist. Das Gleitlager ist aus Vollmaterial hergestellt und umfasst die Werkstoffe oder eine Werkstoffmischung aus Phenolharz + Mineralfasern + Phelite + Koks + Kupferpulver.

Dieses erfindungsgemäße Konzept ermöglicht in dem Spannsystem unter Beibehaltung einer bekannten Bauform ein Tribosystem zu realisieren, mit dem auch in einer öligen Umgebung eine für die Funktion des Zugmitteltriebs erforderliche ausreichende Dämpfung erzielt werden kann, Die erfindungsgemäße Gleitlagerung realisiert selbst bei einer ölbenetzten Kontaktfläche, beziehungsweise einer Flüssigkeitsreibung zwischen den Reibpartnern, dem Trägerelement und dem Gleitlager eine für den Zugmitteltrieb ausreichende Reibung. Der erfindungsgemäße, eine kostengünstige Ausführung darstellende Aufbau der Gleitlagerung kann vorteilhaft innerhalb des Bauraums bisheriger trockener, ungeschmierter Gleitlagerungen von Exzenter-Spannsystemen realisiert werden. Der Vorteil der erfindungsgemäßen Lösung liegt insbesondere darin, dass eine Reibungskonstanz über die Gebrauchsdauer des Spannsystems geschaffen wird sowie sich ein für die Funktion des Spannsystems bedeutsames Stick-Slip-freies Nachstellverhalten einstellt. Der erfindungsgemäße Aufbau sowie die Werkstoffkombinationen der Gleitlagerung zeichnen sich weiterhin durch einen geringen Verschleiß aus. Selbst bei Altölbedingungen, d.h. bei einer Beaufschlagung der Gleitlagerung mit einem durch Rußpartikel oder Säure verunreinigten Öl stellen sich keine unzulässigen Verschleißwerte der erfindungsgemäßen Gleitlagerung ein.

Weitere vorteilhafte Ausgestaltungen der Erfindung sind Gegenstand der abhängigen Ansprüche 2 bis 12.

Ein bevorzugter Aufbau des Gleitlagers sieht vor, das als Grundelement eine aus Stahl hergestellte Hülse vorgesehen ist, deren Mantelfläche beschichtet ist. Als Deckschicht eignet sich dazu ein Bronzesinter (Cu Sn 10). Alternativ dazu bietet es sich an, das Grundelement mit einer Deckschicht zu beschichten, die aus PVDF, PTFE, BaSo₄ und CF (Polyvinylidenfluorid + Teflon + Bariumsulfat + Kohlenstoffflour) besteht.

Für die Gleitlagerung gemäß der Erfindung bietet sich die Verwendung eines Gleitlagers aus einer Werkstoffmischung mit nachfolgend genannten einzelnen Anteilen bzw. in der nachfolgend genannten bevorzugten Auswahl an; Phenolharz (5-45 %) + anorganische Fasern (5-30 %) + Buntmetall (0-25 %) + Kohlenstoffbestandteile (0-20 %) + Siliziumdioxid (0-35 %) und Cellulose (5-35 %).

Gemäß einer die Erfindung verbessernden Maßnahme wird vorgeschlagen, dass alternativ zu einem ungehärteten, eine ausreichende Grundfestigkeit aufweisenden Trägerelement aus Stahl zur Bildung einer verschleißfesten Oberfläche unterschiedliche Maßnahmen anwendbar sind. Zur Behandlung der Oberfläche bietet es sich an, eine Blindhärtung mit oder ohne nachfolgender Brünierung vorzusehen. Die Oberfläche kann außerdem durch ein Härten und anschließendes Anlassen optimiert werden oder durch ein Einsatzhärten und anschließendes Anlassen. Weiterhin bietet es sich an, die Oberfläche durch ein Nitrocarburieren zu behandeln.

Vorteilhaft stellt sich durch die erfindungsgemäßen Maßnahmen, insbesondere mittels der gezielten Oberflächenbehandlung eine Oberflächenhärte von > 400 HV ein. Ein bevorzugtes Lagerspiel der Gleitlagerung sieht ein Lagerspiel zwischen 0 bis 100 µm (≤ 100 µm) vor. Dieses Lagerspiel in Verbindung mit der Oberflächenhärte von > 400 HV verbessert die Gebrauchsdauer der Gleitlagerung, was sich vorteilhaft auf die Lebensdauer des gesamten Spannsystems auswirkt.

Ein weiterer Vorteil der erfindungsgemäßen Lösungen besteht darin, dass mit diesen ein Reibwert der Gleitlagerung von 0,05 bis 0,15 erzielbar ist. Dieser Reibwert gewährleistet eine ausreichende Dämpfung und damit eine optimale Funktion des Spannsystems, die sich trotz einer Schmierstoffbeaufschlagung der erfindungsgemäßen Kombination aus dem Gleittagerwerkstoff, der Oberfläche des Trägerelementes, der Belastung sowie des Lagerspiels einstellt.

Für die Gleitlagerung ist bevorzugt eine geschlitzte Gleitlagerbuchse vorgesehen. Vorteilhaft erfordert dieses Gleitlager keine lageorientierte Einbaulage des Längsschlitzes. Zur Herstellung eines vorteilhaft dünnwandigen eine gerollte Buchse bildenden Gleitlagers eignet sich vorzugsweise ein endloses Bandmaterial mit einer Materialstärke zwischen 0,5 bis 1,5 mm, wobei eine Materialstärke von 1,0 mm bevorzugt wird.

Die erfindungsgemäße Gleitlagerung kann vorteilhaft auch auf ein nach einem Doppelexzenter-Prinzip ausgebildetes Spannsystemen übertragen werden. Dazu schließt das Trägerelement zur Bildung eines Einstellexzenters eine zur Aufnahme der Befestigungsschraube bestimmte außermittige Längsbohrung ein. Der sich dabei einstellende radiale Abstand zwischen der Bohrungsmitte der versetzten Längsbohrung zu einer zentralen Mitte des Spannsystems definiert einen ersten exzentrischen Versatz des Spannsystems, der bei einer Grundeinstellung des Spannsystems einstellbar ist.

Aufgrund der Einbausituation in einer öligen Umgebung schließt das Wälzlager des erfindungsgemäßen Spannsystems keine Dichtungen ein. Für das beidseitig dichtungsfreie Wälzlager bietet es sich weiterhin an auf eine Anfangsbefettung vor einer Inbetriebnahme des Spannsystems zu verzichten.

In einer weiteren vorteilhaften Ausgestaltung umfasst die Erfindung einen Winkelring, der im Einbauzustand kraft- und/oder formschlossig an der Grundplatte fixiert ist und an der gegenseitig ein Ende der Torsionsfeder abgestützt ist. Vorzugsweise schließt ein in Richtung der Exzenterbuchse ausgerichteter Schenkel des Winkelrings lokale Bohrungen und/oder endseitige Ausnehmungen auf, die eine ungehinderte Zirkulation des Öls oder eines Ölnebels des Tribosystems zwischen einer Gleitlagerzone und einem für die Torsionsfeder bestimmten Ringraum des Spannsystems.

Die Erfindung sieht ein Verfahren zur alternativen Darstellung eines ungehärteten, eine ausreichende Grundfestigkeit aufweisenden Trägerelementes aus Stahl, für ein nach einem Exzenter-Prinzip arbeitendes Spannsystem eines Zugmitteltriebs vor. Das in einer ölhaltigen Umgebung eingesetzte Spannsystem umfasst ein Trägerelement, das zur Bildung einer verschleißfesten Oberfläche folgende Schritte einschließt, bedarfsabhängig alternativ oder in einer Folge durchgeführt werden können, wie:
- eine Blindhärtung mit oder ohne nachfolgender Brünierung;
- ein Härten und anschließendes Anlassen;
- ein Einsatzhärten und anschließendes Anlassen;
- ein Nitrocarburieren.

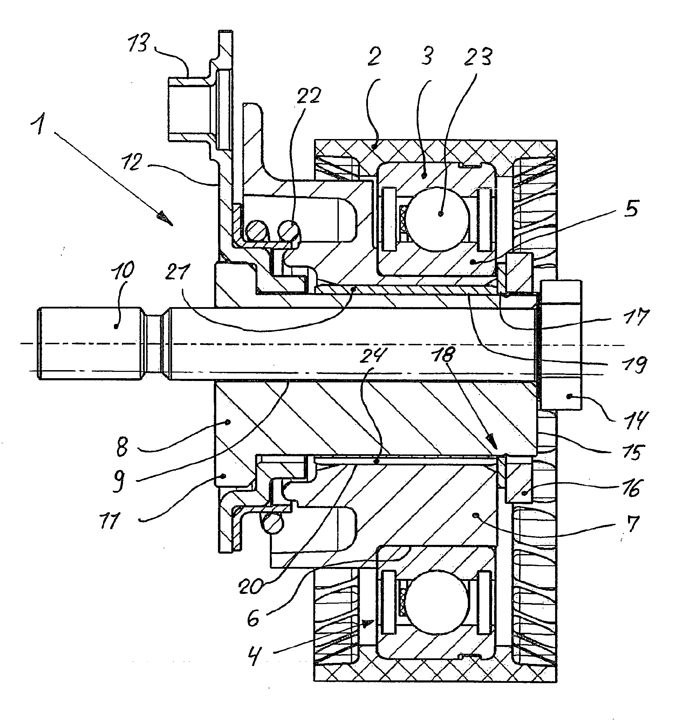

### Kurze Beschreibung der Zeichnung

Weitere die Erfindung verbessernden Maßnahmen werden nachstehend in der Beschreibung eines bevorzugten Ausführungsbeispiels der Erfindung beschrieben. Die einzige Figur zeigt in einem Längsschnitt ein erfindungsgemäß nach einem Doppelexzenter-Prinzip aufgebautes Spannsystem.

Gemäß der einzigen Figur umfasst das Spannsystem 1 eine Laufscheibe 2 über die im Betriebszustand des Spannsystems 1 eine Spannkraft auf einen - hier nicht dargestellten - Riemen aufgebracht wird. Die vorzugsweise aus Kunststoff hergestellte, formschlüssig an einem äußeren Lagerring 3 eines Wälzlagers 4 befestigte Laufscheibe 2 erstreckt sich beidseitig axial über die Breite des Wälzlagers 4. Ein innerer Lagerring 5 des Wälzlagers 4 ist auf einer Mantelfläche 6 einer Exzenterbuchse 7 positioniert. Die auch als Arbeitsexzenter zu bezeichnende Exzenterbuchse 7 umschließt ein als Einstellexzenter gestaltetes Trägerelement 8, in das eine radial zu einer zentralen Mitte des Spannsystems 1 versetzte Längsbohrung 9 eingebracht ist, welche zur Aufnahme einer Schraube 10 bestimmt ist. Im Einbauzustand ist das Spannsystem 1 über einen Bundabschnitt 11 des Trägerelementes 8 an einem nicht dargestellten Maschinenteile, insbesondere dem Kurbelgehäuse einer Brennkraftmaschine abgestützt und mittels der Schraube 10 lösbar befestigt. Eine an dem Bundabschnitt 11 dreh- und lagefixierte Grundplatte 12 weist gehäuseseitig einen Ansatz 13 auf, der zur Einstellung einer definierten Winkelposition des Spannsystems 1 bei der Montage in eine korrespondierende Aussparung des Schienenteils formschlüssig eingreift. Die Schraube 10 ist mit einem Schraubenkopf 14 auf der dem Bundabschnitt 11 abgewandten Stirnseite 15 des Trägerelementes 8 abgestützt. Ein der Stirnseite 15 benachbarter, an dem Trägerelement 8 fixierter Haltering 16 bildet gemeinsam mit einem Reibring 17 ein Axiallager 18. In einem radial von einer Oberfläche 19 des Trägerelementes 8 und einer Innenwandung 20 der Exzenterbuchse 7 begrenzten Ringspalt ist zur Aufnahme eines Gleitlagers 21 bestimmt. Eine zwischen der Grundplatte 12 und der Exzenterbuchse 7 eingesetzte Torsionsfeder 22 beaufschlagt mit einem Torsionsmoment die Exzenterbuchse 7, wodurch diese in Verbindung mit der Laufscheibe 2 in eine das Zugmittel vorspannende Position geschwenkt wird.

Das Spannsystem 1 ist konzipiert für eine Anwendung eines als Riementrieb ausgelegten Zugmitteltriebs in einer öligen Umgebung, beispielsweise in einem stirnseitigen geschlossenen Gehäuse, der als Steuertrieb der Brennkraftmaschine ausgelegt ist. Alle Bauteile des Riementriebs sind dazu ölresistent ausgeführt bzw. berücksichtigen die ölige Einbausituation. Beispielsweise erfordert das Wälzlager 4 weder seitlich den Wälzkörpern 23 zugeordnete Dichtungen noch eine Anfangsbefettung vor einer Inbetriebnahme des Spannsystems 1. Der erfindungsgemäße Gleitlageraufbau umfasst ein Gleitlager 21, welches als Meerschicht-, Sandwich- oder als Vollmaterial-Gleitlager konzipiert ist. Für die Gleitlagerung ist als Gleitlager 21 eine geschlitzte Gleitlagerbuchse vorgesehen, wobei der sich einstellende Längsschlitz 24 keine lageorientierte Einbaulage erfordert. Zur Herstellung eines dünnwandigen eine gerollte Buchse bildenden Gleitlagers 21 eignet sich ein endloses Bandmaterial mit einer Materialstärke zwischen 0,5 bis 1,5 mm.

Ergänzend zu der Darstellung bietet es sich an, dass der Reibring 17 mit dem Gleitlager 21 eine Baueinheit bildet. Der Gleitlagerung zugehörig weist die Oberfläche 19 des Trägerelementes 8 eine definierte Oberflächenhärte von > 400 HV auf. Weiterhin ist zwischen dem Gleitlager 21 und dem Trägerelement 8 ein bevorzugtes Lagerspiel von 0 bis 100 (≤ 100) µm vorgesehen. Durch die Kombination dieser Bauelemente bzw. Werkstoffpaarungen kann für die Gleitiagerung ein Reibwert von 0,05 bis 0,15 realisiert werden.

**Bezugszahlenliste**

| | |
|---|---|
| 1 | Spannsystem |
| 2 | Laufscheibe |
| 3 | Lagerring |
| 4 | Wälzlager |
| 5 | Lagerring |
| 6 | Mantelfläche |
| 7 | Exzenterbuchse |
| 8 | Trägerelement |
| 9 | Längsbohrung |
| 10 | Schraube |
| 11 | Bundabschnitt |
| 12 | Grundplatte |
| 13 | Ansatz |
| 14 | Schraubenkopf |
| 15 | Stirnseite |
| 16 | Haltering |
| 17 | Reibring |
| 18 | Axiallager |
| 19 | Oberfläche |
| 20 | Innenwandung |
| 21 | Gleitlager |
| 22 | Torsionsfeder |
| 23 | Wälzkörper |
| 24 | Längsschlitz |
| 25 | Winkelring |

## Patentansprüche

1. Mechanisches Spannsystem nach einem Exzenter-Prinzip für ein Zugmittel eines Zugmitteltriebs einer Brennkraftmaschine, umfassend ein zylindrisches Trägerelement (8) mit integrierter Längsbohrung (9) für eine Schraube (10) zur lösbaren Befestigung an einem ortsfesten Maschinenteil, wobei das Trägerelement (8) eine verschleißfeste Oberfläche (19) aufweist und von einer Exzenterbuchse (7) umgeben ist, welche über ein mit dem Trägerelement (8) zusammenwirkendes Gleitlager (21) drehbar gelagert ist und ein Wälzlager (4) mit zugehöriger Laufscheibe (2) trägt, wobei zur Aufbringung einer Spreizkraft eine zwischen dem Trägerelement (8) und der Exzenterbuchse (7) wirkende Torsionsfeder (22) vorgesehen ist und wobei zwischen dem Gleitlager (21) und dem Trägerelement (8) ein Lagerspiel von ≤ 150 µm vorgesehen ist, **dadurch gekennzeichnet, dass** das Spannsystem (1) in einer ölhaltigen Umgebung eingesetzt ist und die aus dem Gleitlager (21) und dem Trägerelement (8) gebildete Gleitlagerung unter Ölbeaufschlagung einen Reibwert von 0,05 bis 0,15 aufweist, wobei das Gleitlager (21) aus Vollmaterial hergestellt ist und die Werkstoffe oder eine Werkstoffmischung aus Phenolharz + Mineralfasern + Phelite + Koks + Kupferpulver umfasst.

2. Spannsystem nach Anspruch 1, **dadurch gekennzeichnet, dass** der Aufbau des Gleitlagers (21) eine aus Stahl hergestellte Hülse umfasst, deren beschichtete Mantelfläche eine Deckschicht aus Bronzesinter (Cu Sn 10) aufweist.

3. Spannsystem nach Anspruch 1, **dadurch gekennzeichnet, dass** der Aufbau des Gleitlagers (21) eine aus Stahl hergestellte Hülse umfasst, deren beschichtete Mantelfläche eine Deckschicht PVDF + PTFE + BaSo₄ und CF (Polyvinylidenfluorid + Teflon + Bariumsulfat + Kohlenstoffflour) aufweist.

4. Spannsystem nach einem der Ansprüche 1 bis 3, **dadurch gekennzeichnet, dass** das Gleitlager (21) die Werkstoffe oder eine Werkstoffmischung mit den Anteilen von aus Phenolharz (5-45 %) + anorganische Fasern (5-30 %) + Buntmetall (0-25 %) + Kohlenstoffbestandteile (0-20 %) + Siliziumdioxid (0-35 %) und Cellulose (5-35 %) umfasst.

5. Spannsystem nach einem der Ansprüche 1 bis 4, **dadurch gekennzeichnet, dass** die behandelte oder beschichtete Oberfläche (19) des Trägerelementes (8) eine Härte von > 400 HV aufweist.

6. Spannsystem nach einem der Ansprüche 1 bis 5, **dadurch gekennzeichnet, dass** zwischen dem Gleitlager (21) und dem Trägerelement (8) ein bevorzugtes Lagerspiel von 0 bis 100 µm vorgesehen ist.

7. Spannsystem nach einem der Ansprüche 1 bis 6, **dadurch gekennzeichnet, dass** das Gleitlager (21) einen Längsschlitz (24) aufweist, der keinen lageorientierten Einbau erfordert.

8. Spannsystem einem der Ansprüche 1 bis 7, **dadurch gekennzeichnet, dass** zur Herstellung des eine gerollte Buchse bildenden Gleitlagers (21) ein endloses Bandmaterial mit einer Materialstärke von 0,5 bis 1,5 mm verwendet wird.

9. Spannsystem nach einem der Ansprüche 1 bis 8, **dadurch gekennzeichnet, dass** zur Bildung eines Einstellexzenters das Trägerelement (8) eine außermittige Längsbohrung (9) aufweist, die gemeinsam mit der die Funktion eines Arbeitsexzenters ausübenden Exzenterbuchse (7) ein Doppelexzenter-Spannsystem bildet.

10. Spannsystem nach einem der Ansprüche 1 bis 9, **dadurch gekennzeichnet, dass** das Wälzlager (4) beidseitig dichtungsfrei ist.

11. Spannsystem nach einem der Ansprüche 1 bis 10, **dadurch gekennzeichnet, dass** eine Inbetriebnahme des Spannsystems (1) ohne eine Anfangsbefettung des Wälzlagers (4) erfolgt.

12. Spannsystem nach einem der Ansprüche 1 bis 11, **dadurch gekennzeichnet, dass** ein zwischen der Grundplatte (12) und der Torsionsfeder (23) positionierter Winkelring (25) so gestaltet ist, dass dieser eine Zirkulation des Öls oder eines Ölnebels des Tribosystems ermöglicht.

## Claims

1. Mechanical tensioning system on the basis of an eccentric principle for a traction mechanism of a traction mechanism drive of an internal combustion engine, comprising a cylindrical carrier element (8) with an integrated longitudinal bore (9) for a screw (10) for detachable fastening to a stationary machine part, wherein the carrier element (8) has a wear-resistant surface (19) and is surrounded by an eccentric bushing (7), which is mounted rotatably by way of a plain bearing (21) interacting with the carrier element (8) and bears a roller bearing (4) with an associated runner disc (2), wherein, to apply a spreading force, provision is made of a torsion spring (22) acting between the carrier element (8) and the eccentric bushing (7), and wherein a bearing play of ≤ 150 µm is provided between the plain bearing (21) and the carrier element (8), **characterized in that** the tensioning system (1) is used in an oil-containing environment and the plain bearing system formed from the plain bearing (21) and the carrier element (8) has a coefficient of friction of 0.05 to 0.15 under the action of oil, wherein the plain bearing (21) is produced from solid material and comprises the materials or a material mixture of phenolic resin + mineral fibres + phelite + coke + copper powder.

2. Tensioning system according to Claim 1, **characterized in that** the structure of the plain bearing (21) comprises a sleeve which is produced from steel and the coated lateral surface of which has a top layer of bronze sinter (Cu Sn 10).

3. Tensioning system according to Claim 1, **characterized in that** the structure of the plain bearing (21) comprises a sleeve which is produced from steel and the coated lateral surface of which has a top layer PVDF + PTFE + BaSo₄ and CF (polyvinylidene fluoride + teflon + barium sulphate + fluorocarbon).

4. Tensioning system according to one of Claims 1 to 3, **characterized in that** the plain bearing (21) comprises the materials or a material mixture with the proportions of phenolic resin (5-45%) + inorganic fibres (5-30%) + non-ferrous metal (0-25%) + carbon constituents (0-20%) + silicon dioxide (0-35%) and cellulose (5-35%).

5. Tensioning system according to one of Claims 1 to 4, **characterized in that** the treated or coated surface (19) of the carrier element (8) has a hardness of > 400 HV.

6. Tensioning system according to one of Claims 1 to 5, **characterized in that** a preferred bearing play of 0 to 100 µm is provided between the plain bearing (21) and the carrier element (8).

7. Tensioning system according to one of Claims 1 to 6, **characterized in that** the plain bearing (21) has a longitudinal slot (24), which does not require a positionally oriented installation.

8. Tensioning system according to one of Claims 1 to 7, **characterized in that** an endless strip material having a material thickness of 0.5 to 1.5 mm is used to produce the plain bearing (21) which forms a rolled bushing.

9. Tensioning system according to one of Claims 1 to 8, **characterized in that**, to form an adjusting eccentric, the carrier element (8) has an off-centre longitudinal bore (9), which, together with the eccentric bushing (7) performing the function of a working eccentric, forms a double eccentric tensioning system.

10. Tensioning system according to one of Claims 1 to 9, **characterized in that** the roller bearing (4) is free of seals on both sides.

11. Tensioning system according to one of Claims 1 to 10, **characterized in that** the tensioning system (1) is started up without initial lubrication of the roller bearing (4).

12. Tensioning system according to one of Claims 1 to 11, **characterized in that** an angled ring (25) positioned between the base plate (12) and the torsion spring (23) is configured in such a way that it allows for circulation of the oil or of an oil mist in the tribosystem.

## Revendications

1. Système de serrage mécanique selon le principe excentrique pour un moyen de traction d'un entraînement à moyen de traction d'un moteur à combustion interne, comprenant un élément de support cylindrique (8) muni d'un alésage longitudinal intégré (9) pour une vis (10) pour la fixation desserrable à une partie de machine fixe, l'élément de support (8) présentant une surface résistant à l'usure (19) et étant entouré d'un manchon excentrique (7), qui est monté à rotation par le biais d'un palier lisse (21) coopérant avec l'élément de support (8), et qui porte un palier à roulement (4) avec un disque de roulement associé (2), un ressort de torsion (22) agissant entre l'élément de support (8) et le manchon excentrique (7) étant prévu pour appliquer une force d'écartement et un jeu de palier ≤ 150 µm étant prévu entre le palier lisse (21) et l'élément de support (8), **caractérisé en ce que** le système de serrage (1) est introduit dans un environnement huileux et le support sur palier lisse formé par le palier lisse (21) et l'élément de support (8) par sollicitation d'huile présentant un coefficient de friction de 0,05 à 0,15, le palier lisse (21) étant fabriqué en matériau massif et comprenant les matériaux ou un mélange de matériaux constitué de résine phénolique, de fibres minérales, de phélite, de coke, et de poudre de cuivre.

2. Système de serrage selon la revendication 1, **caractérisé en ce que** la structure du palier lisse (21) comprend un manchon fabriqué en acier, dont la surface d'enveloppe revêtue présente une couche de recouvrement à base de frittage de bronze (Cu Sn 10).

3. Système de serrage selon la revendication 1, **caractérisé en ce que** la structure du palier lisse (21) comprend un manchon fabriqué en acier, dont la surface d'enveloppe revêtue présente une couche de recouvrement à base de PVDF, de PTFE, de BaSO₄ et de CF (fluorure de polyvinylidène, téflon, sulfate de baryum, et fluorocarbone).

4. Système de serrage selon l'une quelconque des revendications 1 à 3, **caractérisé en ce que** le palier lisse (21) comprend les matériaux ou un mélange de matériaux comprenant des proportions de résine phénolique (5-45 %), de fibres inorganiques (5-30 %), de métal lourd non ferreux (0-25 %), de constituants carbonés (0-20 %), de dioxyde de silicium (0-35 %) et de cellulose (5-35 %).

5. Système de serrage selon l'une quelconque des revendications 1 à 4, **caractérisé en ce que** la surface traitée ou revêtue (19) de l'élément de support (8) présente une dureté > 400 HV.

6. Système de serrage selon l'une quelconque des revendications 1 à 5, **caractérisé en ce qu'**un jeu de palier préféré entre le palier lisse (21) et l'élément de support (8) de 0 à 100 µm est prévu.

7. Système de serrage selon l'une quelconque des revendications 1 à 6, **caractérisé en ce que** le palier lisse (21) présente une fente longitudinale (24) qui ne requiert aucune insertion de manière orientée en position.

8. Système de serrage selon l'une quelconque des revendications 1 à 7, **caractérisé en ce que** pour la fabrication du palier lisse (21) formant un manchon laminé, on utilise un matériau en bande sans fin ayant une épaisseur de matériau de 0,5 à 1,5 mm.

9. Système de serrage selon l'une quelconque des revendications 1 à 8, **caractérisé en ce que** pour la formation d'un excentrique d'ajustement, l'élément de support (8) présente un alésage longitudinal décentré (9), qui forme, conjointement avec le manchon excentrique (7) exerçant la fonction d'un excentrique de travail, un système de serrage à double excentrique.

10. Système de serrage selon l'une quelconque des revendications 1 à 9, **caractérisé en ce que** le palier à roulement (4) est exempt de joint d'étanchéité des deux côtés.

11. Système de serrage selon l'une quelconque des revendications 1 à 10, **caractérisé en ce qu'**une mise en service du système de serrage (1) a lieu sans graissage initial du palier à roulement (4).

12. Système de serrage selon l'une quelconque des revendications 1 à 11, **caractérisé en ce qu'**une bague coudée (25) positionnée entre la plaque de base (12) et le ressort de torsion (23) est configurée de telle sorte qu'elle permette une circulation d'huile ou d'un brouillard d'huile du système tribologique.
